# EUROPÄISCHE PATENTSCHRIFT

(11) **EP 4 252 699 B1**
(45) Veröffentlichungstag und Bekanntmachung des Hinweises auf die Patenterteilung: **20.05.2026**
(21) Anmeldenummer: 22165245.6
(22) Anmeldetag: 29.03.2022
(51) Int. Cl.: A61C 5/90, A61B 17/02

(54) **FOLIENSPANNELEMENT**
FILM CLAMPING ELEMENT
ÉLÉMENT DE TENSION DE FEUILLE

(43) Veröffentlichungstag der Anmeldung: 04.10.2023
(73) Patentinhaber: Ivoclar Vivadent AG, 9494 Schaan (LI)
(72) Erfinder: Lichtensteiger, Markus, 9462 Montlingen (CH)
(74) Vertreter: Baldus, Oliver

(56) Entgegenhaltungen:
- EP-A1- 3 666 221
- EP-A1- 4 011 320
- EP-B1- 1 709 935
- WO-A1-2020/193398
- WO-A1-2021/059070
- CN-Y- 2 850 556
- DE-A1- 102014 109 023
- DE-A1- 19 747 833
- US-A1- 2019 269 312
- US-A1- 2020 315 434
- US-B2- 10 874 386
- LUBRIZOL ADVANCED MATERIALS: "Isoplast 302EZ TPU", 28 August 2015 (2015-08-28), pages 1 - 3, XP093283545, Retrieved from the Internet <URL:https://upmold.com/wp-content/uploads/data-sheet/TPU%20Isoplast%20302EZ.pdf?utm_source=chatgpt.com> [retrieved on 20250603]
- LUBRIZOL ADVANCED MATERIALS: "Lubrizol LifeScience Polymers", 31 December 2013 (2013-12-31), pages 1 - 2, XP093283552, Retrieved from the Internet <URL:https://www.lubrizol.com/-/media/Lubrizol/Health/TDS/Isoplast-2530-ETPU-English.pdf?utm_source=chatgpt.com> [retrieved on 20250603]
- KERN GMBH: "Materialselector | KERN", 30 September 2022 (2022-09-30), pages 1 - 7, XP055966741, Retrieved from the Internet <URL:https://www.kern.de/de/richtwerttabelle> [retrieved on 20220930]
- TRIBOPLAST GMBH: "Reibungs- und Verschlei�kennwerte von Kunststoffen - Tabellen", 30 September 2022 (2022-09-30), pages 1 - 12, XP055966756, Retrieved from the Internet <URL:https://www.triboplast.de/reibungswerte-und-verschleiss/> [retrieved on 20220930]
- HENAREJOS-DOMINGO V�CTOR ET AL: "Digital scanning under rubber dam: An innovative method for making definitive impressions in fixed prosthodontics", JOURNAL OF ESTHETIC AND RESTORATIVE DENTISTRY, vol. 33, no. 7, 18 October 2021 (2021-10-18), GB, pages 976 - 981, XP055966863, ISSN: 1496-4155, Retrieved from the Internet <URL:https://onlinelibrary.wiley.com/doi/full-xml/10.1111/jerd.12787> [retrieved on 20220930], DOI: 10.1111/jerd.12787

## Beschreibung

Die Erfindung betrifft ein Folienspannelement, gemäß dem Oberbegriff von Anspruch 1.

Derartige Folienspannelemente werden seit Jahrzehnten unter dem Namen OPTRAGATE erfolgreich eingesetzt. Sie bestehen aus einem Lippenring und einem Vestibulärring, zwischen denen sich eine Folie erstreckt. Die sich aus diesem Aufbau ergebende Form ist im Wesentlichen ringförmig und erlaubt es, den Lippenbereich des Patienten abzudecken und so einen hygienisch einwandfreien Zugang zum Mundraum des Patienten zu ermöglichen.

Zur Vermeidung von allergischen Beeinträchtigungen ist die Folie typischerweise latexfrei ausgebildet.

Ein Beispiel für ein derartiges Folienspannelement ist aus der EP 3 708 112 A1 und der EP 3 666 221 A1 zu entnehmen. Die Folie muss in der Lage sein, sich den recht unterschiedlichen anatomischen Anforderungen anzupassen. Um nicht eine Vielzahl von unterschiedlichen Formen von Folienspannelement bereithalten zu müssen, wird typischerweise für die Folie ein hochelastisches Elastomer verwendet. Dieses wird typischerweise im Spritzgussverfahren auf die beiden genannten Ringe aufgespritzt. Mit dieser Lösung ist es möglich, beispielsweise mit lediglich zwei Größen eines Folienspannelements auszukommen, eine Größe für Erwachsene und eine Größe für Kinder. Damit ist die Lagerhaltung auf das notwendige Minimum beschränkt. Elastomere (TPE) zeigen deutlich geringere allergische Reaktionen als Latex. Nachdem jedoch immerhin 15% der Bevölkerung allergiegeneigt sind, bestehen auch gegen diese synthetischen Kunststoffe Allergien.

Ein weiteres Problem bei der Verwendung von TPE für die Folie ist der hohe Haftreibungsbeiwert der Folie. Wenn der Zahnarzt ein Instrument in den Mund des Patienten einführt und der Schaft des Instrumentes in Anlage mit der Folie gerät, bleibt diese häufig an dem Schaft haften. Dies führt zu dem sogenannten Slip-Stick-Effekt. Beim Scannen des Vestibulärraums führt dieser dazu, dass der Scan unterbrochen oder verzerrt wird und gegebenenfalls wiederholt werden muss.

Daher ist es vorgeschlagen geworden, die Folie auf der Oralseite gleitfähig und auf der Lippenseite allergiesicher zu beschichten.

Derartige Beschichtungen verteuern zum einen die Herstellung des Folienspannelements, und machen auch die Entsorgung dieses Einmalprodukts problematischer, da dann insgesamt vier verschiedene Materialien (Ringe, Folie, Innenbeschichtung, Außenbeschichtung) verwendet werden.

Daher liegt der Erfindung die Aufgabe zugrunde, ein Folienspannelement, gemäß dem Oberbegriff von Anspruch 1 zu schaffen, das preisgünstig herzustellen und in der Handhabung unproblematisch ist.

Diese Aufgabe wird erfindungsgemäß durch Anspruch 1 gelöst.

Vorteilhafte Weiterbildungen ergeben sich aus den Unteransprüchen.

Erfindungsgemäß ist es vorgesehen, die Folie aus einem zähharten Kunststoff herzustellen, dessen E-Modul zwischen 1 und 2 Kilonewton pro Quadratmillimeter beträgt. Als ein solcher Kunststoff kann Polypropylen oder gegebenenfalls Polyamid verwendet werden. Diese beiden Kunststoffe sind nicht als allerogen bekannt. Die Folie besteht erfindungsgemäß aus lediglich einem einzigen Material, nämlich aus dem zähharten Kunststoff, und trägt keine Beschichtungen.

Erfindungsgemäß besonders günstig ist es und, dass durch die geeignete Größen Bemessungen des Folien Spannelement trotz der Verwendungen eines zähharten Kunststoff für die Folien lediglich zwei Größen verwendet werden müssen.

In Zusammenhang mit der Erfindung vorgenommene Untersuchungen haben ergeben, dass auch bei Verwendung von lediglich einer Erwachsenengröße und einer Kindergröße keine Beanstandungen hinsichtlich der Passform vorgebracht wurden. Die gleichmäßige Druckaufbringung bzw. Verformung von Weichgewebe wird von den Patienten keineswegs als unangenehm empfunden, zumindest nicht im Vergleich mit der spanabhebenden Bearbeitung von Zahnhartgewebe, wie es für die Aufbringung von den Dentalrestaurationen erforderlich ist.

Erfindungsgemäß ist bei Verwendung von Polypropylen und Polyamid für die Folie kein Slip-Stick-Effekt zu beobachten. Daher ist es gewährleistet, dass ein Scan des Vestibulärraums unproblematisch durchgeführt werden kann, so dass die Behandlungszeit insgesamt im Vergleich zum Stand der Technik verkürzt ist, was sowohl für den Zahnarzt als auch für den Patienten angenehm ist.

Der Scan kann auch in einer präziseren Höhenlage durchgeführt werden. Der Zahnarzt legt hierzu bewusst den Schaft des Intraoralscanners an die Folie an, beispielsweise an die Folie, die auf der Unterlippe des Patienten anliegt, und führt den Scankopf auf gleichbleibender Höhe den ganzen Vestibulärraum entlang. Erfindungsgemäß ist insofern auch die Qualität des Scans verbessert.

Das Folienspannelement wird insofern erfindungsgemäß als Stütze für die Bewegung des Scankopfs verwendet.

Erfindungsgemäß lässt sich das Folienspannelement zudem in besonders einfacher und effizienter Weise herstellen:
Für die Herstellung der Folie wird zunächst eine Form mit einer Patrize und einer Matrize verwendet. die Form ist zunächst geöffnet, und eine waren förmige Folie erstreckt sich etwas gespannt zwischen der Patrize und der Matrize.

Vor dem Schließen der Form, während des Schließens der Form und/oder nach dem Schließen der Form wird an die Patrize Unterdruck angelegt, der dazu führt, dass die Folie dort angesaugt wird. Alternativ oder zusätzlich kann auch an die Matrize Unterdruck oder auch Überdruck angelegt werden, um die Anlage der Folie in der Form zu verbessern.

An den Stellen, an denen die Ringe ausgebildet werden sollen, sind ringförmige Hohlräume vorgesehen, die die Form je eines Ringes haben. Über Spritzgussdüsen wird an diesen Stellen das Material für die Ringe eingespritzt und an die Folie angespritzt.

Hierbei ist besonders günstig, dass für die Ringe und die Folie überraschend das gleiche Material verwendet werden kann. Der Unterschied in der Materialstärke von 0,1 mm zu 1 Millimeter reicht aus, um die gewünschte Festigkeitsverteilung sicherzustellen.

Bevorzugt sind sowohl die Ringe als auch die Folie aus Polypropylen. die Folie hat über ihren Verlauf eine konstante Stärke, und die Ringe haben im Schnitt einen ovalen oder kreisförmigen, jedenfalls aber abgerundeten Aufbau.

In einer modifizierten Ausgestaltung ist es vorgesehen, dass die Ringe sich zur Folie hin verjüngen. Damit wird ein Steifigkeitssprung vermieden, und die Folie kann ohne Gefahr, dass sie an dieser Stelle reißt, eine geringere Materialstärke aufweisen.

Anstelle von Polypropylen kann auch ein Polyamidgewebe für die Folie und Polyamid für die Ringe eingesetzt werden, oder auch ein Gewebe aus Polyolefin.

Bevorzugt ist ein Ring-Hohlraum am Fuß der Patrize ausgebildet und ein weiterer am Kopf der Patrize. der erstgenannte Hohlraum wird für das Spritzen des Lippenrings verwendet, und der zweitgenannte für das Spritzen des Vestibulärrings.

Mit einem geeigneten Stanzwerkzeug wird nun unmittelbar angrenzend an den Vestibulärring die Folie an der Kopfseite der Patrize ausgestanzt.

Das ausstanzen kann auch bereits mit dem Schließen der Spritzgussformen erfolgen, indem angrenzend an den Hohlraum für den Vestibulärring ein ringförmiges Stanzmesser dort die Folie abtrennt.

In jedem Falle ergibt sich ein kegelstumpfförmiges Folienspannelement, das besonders gut für den Scanvorgang im Mund des Patienten geeignet ist.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: einen schematischen Schnitt durch eine Form zur Herstellung eines erfindungsgemäßen Folienspannelement in einer Ausführungsform, in offenem Zustand;
- Fig. 2: die Darstellung gemäß Fig. 1, jedoch in teilgeschlossenem Zustand der Form;
- Fig. 3: die Form gemäß den Figuren 1 und 2 in geschlossenem Zustand, bereit zum Einspritzen der Ringe;
- Fig. 4: die Form gemäß den Figuren 1 bis 3 in geöffneten Zustand, nach Entfernung der Matrize; und
- Fig. 5: ein erfindungsgemäß hergestelltes Folienspannelement, vor und nach dem Ausstanzen der Stirnfläche.

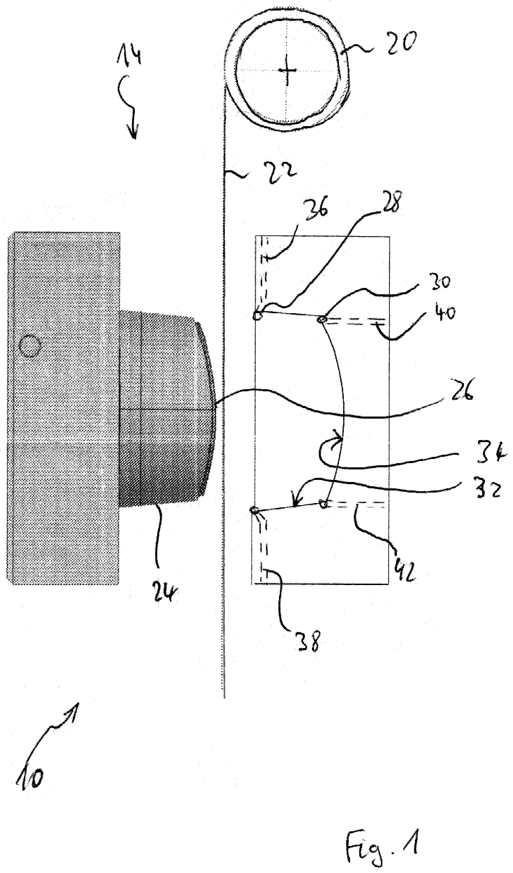

In Fig. 1 ist eine Form 10 für die Herstellung eines erfindungsgemäßen Folienspannelements 12 dargestellt. Grundsätzlich besteht die Form 10 aus einer Patrize 14 und einer Matrize 16. Diese sind in an sich bekannter Weise zum Schließen der Form aufeinander zu bewegbar.

Eine Folienbahn 18 ist auf einer Vorratsrolle 20 aufgewickelt und wird als Folie 22 zwischen Patrize 14 und Matrize 16 hindurchgeführt.

Die Folie weist einen Elastizitätsmodul von weniger als 2 KN/mm² auf. Sie ist aus einem zähharten Kunststoff, mit einem Elastizitätsmodul von mehr als 1 KN/mm² . Sie kann aus Polypropylen, Polyamid oder aus Polyolefin bestehen und eine für das Folienspannelement geeignet Stärke haben. Diese kann z.B. zwischen 0,08 mm und 0,4 mm betragen.

Beim Schließen der Form 10 erstreckt sich die Folie 22 dergestalt zwischen der Patrize 14 und der Matrize 16, dass diese von der Folie 22 getrennt sind. Die Patrize 14 weist im wesentlichen eine Kegelstumpfform auf, mit einem Kegelstumpf 24 und einer Stirnfläche 26. In dem dargestellten Ausführungsbeispiel ist die Stirnfläche 26 konvex vorgewölbt.

Außerhalb des Wegs der Folienbahn 18 liegen die Matrize 16 und die Patrize 14 aneinander an. Damit ist die Form 10 geschlossen. Zwischen der Patrize 14 und der Matrize 16 ist ein Spalt an der Stelle vorgesehen, an der die Folienbahn 18 verläuft. Der Spalt ist an die Stärke der Folienbahn angepasst und hat beispielsweise eine Dicke von 0,1 mm.

Bei geschlossener Form 10 füllt die Folienbahn 18 insofern die Form 10 aus.

Zusätzlich sind in der Matrize 16 jedoch zwei Ringräume 28 und 30 ausgebildet. Der Ringraum 28 erstreckt sich bei geschlossener Form 10 am Fuß des Kegelstumpfes 24 der Patrize 14, also am patrizenseitigen Ende der Matrize 16.

Der Ringraum 30 erstreckt sich bei geschlossener Form 10 am Übergang des Kegelstumpfes 24 zur Stirnfläche 26, insofern also am Übergang der Wand 32 der Matrize 16 zu ihrer Basisfläche 34.

Beide Ringräume 28 und 30 haben einen im Wesentlichen kreisförmigen Querschnitt von etwa einem Millimeter und erstrecken sich im Verlauf der Folienbahn 18.

Der Ringraum 28 ist für die Ausbildung des Lippenrings des Folienspannelements 12 bestimmt, und der Ringraum 30 für die Ausbildung des Vestibulärrings des Spannelements 12.

Zum Ringraum 28 hin erstrecken sich zwei Spritzgusskanäle 36 und 38. Anstelle dessen ist es auch möglich, lediglich einen der Spritzguss-Kanäle 36 und 38 zu realisieren, denn der Ringraum 28 wird auch dann mit Spritzgussmaterial gefüllt. Es ist auch möglich, den Spritzgusskanal 36 als solchen zu verwenden und, und die durch den Spritzguss verdrängte Luft über den Kanal 38 entweichen zu lassen.

Demgegenüber ist der Ringraum 30 für die Ausbildung des Vestibulärrings des Folienspannelements 12 vorgesehen. Zum Ringraum 30 hin erstrecken sich Kanäle 40 und 42. Auch hier ist es möglich, lediglich einen der Kanäle 40 und 42 für den Spritzguss zu verwenden, und den anderen für das Entweichen der verdrängten Luft zu verwenden.

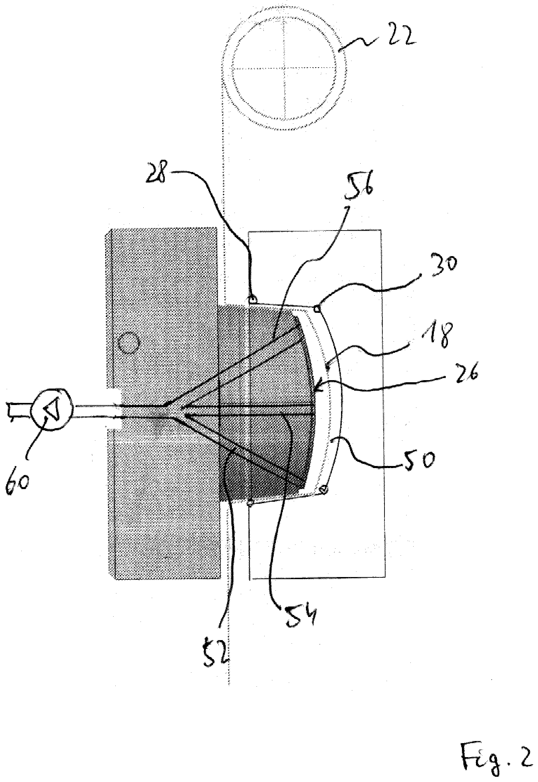

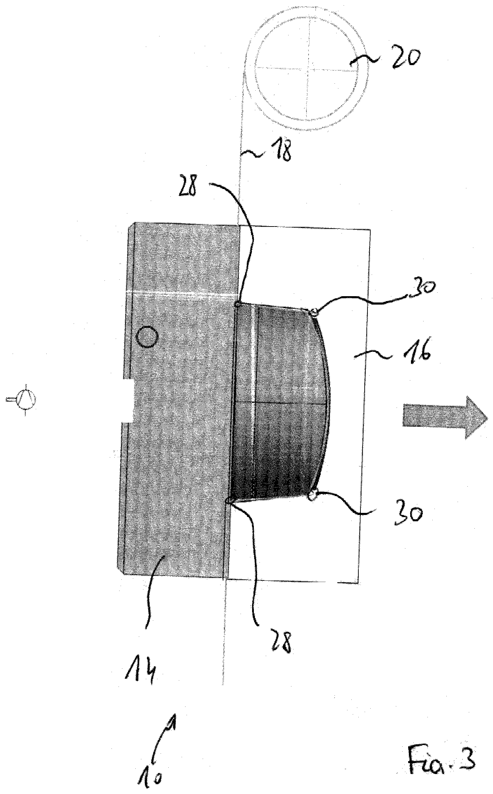

Aus dem Vergleich der Figuren 1 und 2 ergibt sich, dass in einer Zwischenposition zwischen der offenen Form 10 gemäß Fig. 1 und der geschlossenen Form 10 gemäß Fig. 3 die Folienbahn 18 sich über die Patrize 14 in die Matrize 16 hinein erstreckt. Zwischen der Patrize 14 und Matrize 16 verbleibt ein Hohlraum 50, in dem lose und ungeführt die Folienbahn 18 verläuft.

In der Patrize 14 sind Saugkanäle 52, 54 und 56 ausgebildet, die an der Stirnfläche 26 enden, die mit einer Unterdruckquelle 60 verbunden sind. Wenn der Unterdruck eingeschaltet wird, saugt die Stirnfläche 26 die Folienbahn 18 an, so dass sie an ihr anliegt. Beim Schließen der Form 10 legt sich die Folienbahn 18 daher faltenfrei und glatt in den Spalt zwischen Patrize 14 und Matrize 16 ein. Zusätzlich hierzu ist es vorgesehen, die Folienbahn 18 unter einer gewissen, aber geringen Spannung zu halten. Diese lässt sich in weiten Bereichen an die Erfordernisse anpassen. Sie kann zwischen 0,1 Newton und 10 Newton betragen.

Aus Fig. 3 ist die Form 10 in dem geschlossenen Zustand ersichtlich. Hier wie auch in den weiteren Figuren entsprechen gleiche Bezugszeichen gleichen oder ähnlichen Teilen. Die Ringräume 28 und 30 erstrecken sich im Verlauf der Folienbahn 18. Damit wird beim Spritzgießen der Ringräume 18 und 20 das Spritzgussmaterial unmittelbar an die Folie 22 angespritzt.

Das Spritzgussmaterial kann das gleiche Material wie das Material der Folie sein. Das Folienspannelement wird durch das Anspritzen zusammen mit den Spannringen in einem Zuge hergestellt.

Nachdem das Spritzgießen in der Position gemäß Fig. 3 erfolgt ist, wird die Form 10 soweit abgekühlt, dass das Spritzgussmaterial erstarrt ist. Hierzu können in der Form 10 nicht dargestellte Kühlkanäle ausgebildet sein, die es ermöglichen, das Abkühlen innerhalb weniger Sekunden zu realisieren.

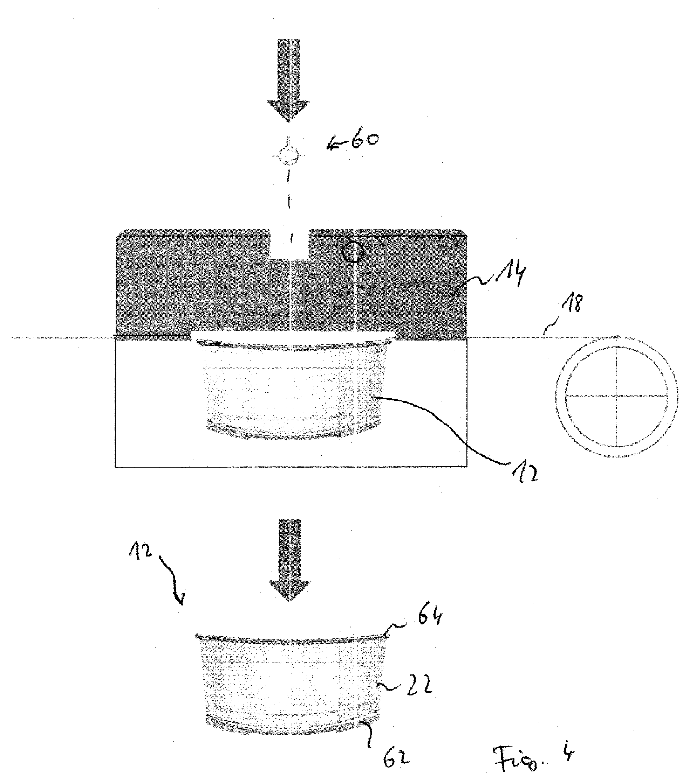

Hieran anschließend erfolgt das Entformen. Dies ist in Fig. 4 dargestellt. Die Matrize 16 wurde bereits entfernt und und das fertig ausgebildete Folienspannelement 16 liegt frei. Aufgrund der Kegelstumpfform der Patrize 14 lässt sich das Folienspannelement 12 leicht entfernen. Dies erfolgt bevorzugt maschinell.

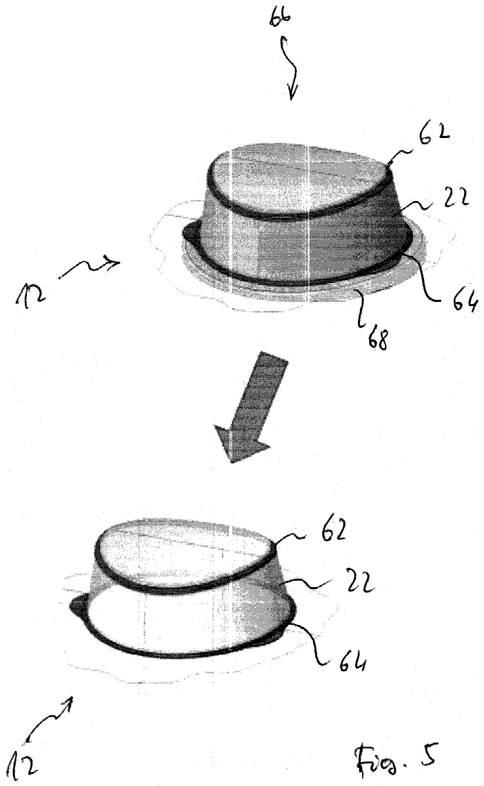

Aus Fig. 5 oben ist das Folienspannelement 12 mit dem Vestibulärring 62 und dem Lippenring 64 ersichtlich. An seiner Stirnseite 66 besteht noch die Folie, die jedoch bei der Anwendung nicht mehr benötigt wird.

Ferner ist ein Folienüberschuss 68 dem Lippenring 64 benachbart vom Spritzgussvorgang übrig geblieben.

Diese beiden Überschüsse werden ausgestanzt und verworfen.

Damit ergibt sich die aus Fig. 5 unten ersichtliche Form des erfindungsgemäßen Folienspannelements 12.

Der gesamte Prozess der Herstellung des erfindungsgemäßen Folienspannelements lässt sich ohne weiteres maschinell und automatisch realisieren.

## Patentansprüche

1. Folienspannelement (12) für dentale Anwendungen, mit einer Folie, (22), die sich zwischen Spannringen (62, 64) erstreckt, wobei die Folie ein Elastizitätsmodul von weniger als 2 KN/mm² aufweist, **dadurch gekennzeichnet, dass** die Folie (22) aus einem, insbesondere zähharten, Kunststoff mit einem Elastizitätsmodul von mehr als 1 KN/mm² besteht und das Folienspannelement : (12) zusammen mit den Spannringen (62, 64) hergestellt ist.

2. Folienspannelement (12) nach Anspruch 1, **dadurch gekennzeichnet, dass** die Spannringe (62, 64) aus dem gleichen zähharten Kunststoff wie die Folie (22) bestehen und insbesondere einstückig mit dieser sind.

3. Folienspannelement (12) nach einem der vorhergehenden Ansprüche, **dadurch gekennzeichnet, dass** es im Mold-Labelling- oder im Mold-Coating-Verfahren hergestellt ist.

4. Folienspannelement (12) nach einem der vorhergehenden Ansprüche, **dadurch gekennzeichnet, dass** das Folienspannelement (12) frei von einer Beschichtung und/oder hydrophob ist.

## Claims

1. A film tensioning element (12) for dental applications, having a film (22) which extends between tensioning rings (62, 64), the film having a modulus of elasticity of less than 2 KN/mm², **characterized in that** the film (22) consists of a plastic, in particular a tough plastic, having a modulus of elasticity of more than 1 KN/mm², and the film tensioning element (12) is produced together with the tensioning rings (62, 64).

2. The film tensioning element (12) according to claim 1, **characterized in that** the tensioning rings (62, 64) consist of the same tough plastic as the film (22) and are in particular integral with the latter.

3. The film tensioning element (12) according to one of the preceding claims, **characterized in that** it is produced by the mold labelling or mold coating method.

4. The film tensioning element (12) according to one of the preceding claims, **characterized in that** the film tensioning element (12) is free of a coating and/or is hydrophobic.

## Revendications

1. Élément de tension de film (12) destiné à des applications dentaires, comprenant un film (22) qui s'étend entre des anneaux de tension (62, 64), ou le film présente un module d'élasticité inférieur à 2 kN/mm², **caractérisé en ce que** la feuille (22) est constituée d'une matière plastique, en particulier d'une matière plastique dure et résistante, présentant un module d'élasticité supérieur à 1 kN/mm², et **en ce que** l'élément de tension de film (12) est fabriqué d'un seul tenant avec les anneaux de tension (62, 64).

2. Élément de tension de film (12) selon la revendication 1, **caractérisé en ce que** les anneaux de tension (62, 64) sont constitués de la même matière plastique résistante et dure que le film (22) et sont en particulier d'un seul tenant avec celui-ci.

3. Élément de tension de film (12) selon l'une des revendications précédentes, **caractérisé en ce qu'**il est fabriqué selon le procédé de moulage par étiquetage (mold labelling) ou de moulage par revêtement (mold coating).

4. Élément de tension de film (12) selon l'une des revendications précédentes, **caractérisé en ce que** l'élément de tension de film (12) est dépourvu de revêtement et/ou est hydrophobe.
